# EUROPEAN PATENT APPLICATION

(11) **EP 4 607 682 A1**
(43) Date of publication of application: **27.08.2025**
(21) Application number: 24800225.5
(22) Date of filing: 02.05.2024
(51) Int. Cl.: H01M 50/446, H01M 50/431, H01M 50/489, H01M 50/42, H01M 50/426, H01M 4/38, H01M 10/052, H01M 10/30

(54) **SELF-SUPPORTING SEPARATOR FOR ELECTROCHEMICAL DEVICE, AND ELECTROCHEMICAL DEVICE COMPRISING SAME**

(30) Priority: 03.05.2023 KR 20230058001; 30.04.2024 KR 20240057294
(71) Applicant: LG Energy Solution, Ltd., Seoul 07335 (KR)
(72) Inventor: SHIN, Jin Young, Daejeon 34122 (KR); JEONG, So Mi, Daejeon 34122 (KR); BANG, Ji Hyun, Daejeon 34122 (KR)
(74) Representative: Hoffmann Eitle
(86) International application number: PCT/KR2024/005914
(87) International publication number: WO 2024/228544

(57) **Abstract**

The present disclosure relates to a self-supporting separator for an electrochemical device and an electrochemical device including the same, and relates to a self-supporting separator for an electrochemical device, which includes a negative electrode containing a silicon-based active material, wherein the self-supporting separator for an electrochemical device improves compression resistance, improves energy density, and exhibits high lifespan characteristics by adjusting the surface roughness Sa of the separator by adjusting the content and average particle diameter of the inorganic particles, and an electrochemical device including the same.

## Description

### [TECHNICAL FIELD]

The present disclosure claims the benefit of Korean Patent Application No. 10-2023-0058001 filed in the Korean Intellectual Property Office on May 3, 2023 and Korean Patent Application No. 10-2024-0057294 filed in the Korean Intellectual Property Office on April 30, 2024, and the entire contents thereof are included in the present disclosure.

The present disclosure relates to a self-supporting separator for an electrochemical device and an electrochemical device including the same, and specifically to a self-supporting separator for an electrochemical device, which is provided with a negative electrode containing a silicon-based active material, the self-supporting separator that improves compression resistance, improves energy density, and exhibits high electrochemical device lifespan characteristics by adjusting the surface roughness Sa of the separator by adjusting the content and average particle diameter of inorganic particles, and an electrochemical device including the same.

### [BACKGROUND ART]

A separator among the components of an electrochemical device includes a polymer substrate with a porous structure located between a positive electrode and a negative electrode, and serves to isolate the positive electrode and the negative electrode, prevent electrical short circuit between the two electrodes, and allow an electrolyte and ions to pass. The separator itself does not participate in the electrochemical reaction, but physical properties such as wettability to the electrolyte, degree of porosity, and thermal contraction rate affect the performance and safety of the electrochemical device.

Accordingly, in order to strengthen the physical properties of the separator, various methods have been attempted to change the physical properties of the coating layer by adding a coating layer to a porous polymer substrate and adding various materials to the coating layer. For example, an inorganic material may be added to the coating layer to improve the mechanical strength of the separator, or an inorganic material or hydrate may be added to the coating layer to improve the flame retardancy and heat resistance of the polymer substrate.

The separator may be bonded to the electrode through a lamination process, and a polymer binder may be added to a coating layer composition of the separator to ensure adhesive force between the electrode and the separator.

On the other hand, since polyolefin-based resin, which is widely used as a porous polymer substrate for electrochemical devices, shrinks when it is exposed to high temperatures, there have been problems in that the positive electrode and the negative electrode come into contact to cause an electrical short circuit between the two electrodes, and heating occurs to cause thermal runaway due to the decomposition reaction of the electrolyte and the active material.

Therefore, research on self-supporting separators that can improve the energy density and lifespan characteristics of electrochemical devices was needed.

### [DETAILED DESCRIPTION OF INVENTION]

### [TECHNICAL PROBLEM]

The technical problem to be achieved by the present disclosure is to provide a self-supporting separator for an electrochemical device, which is provided with a negative electrode containing a silicon-based active material, the self-supporting separator that improves compression resistance and can improve energy density and lifespan characteristics of the electrochemical device by adjusting the surface roughness Sa of the separator by adjusting the content of inorganic particles, and an electrochemical device including the same.

However, the problem to be solved by the present disclosure is not limited to the problem mentioned above, and other problems not mentioned will be clearly understood by those skilled in the art from the following description.

### [TECHNICAL SOLUTION]

One embodiment of the present disclosure is a self-supporting separator for an electrochemical device, which is provided with a negative electrode containing a silicon-based active material, the self-supporting separator including inorganic particles and a polymer binder provided on part or all of the surface of the inorganic particles, and contains pores, the content of the inorganic particles is 70 parts by weight or more based on 100 parts by weight of the separator, and the separator has a surface roughness Sa of 600 nm or more to 1,100 nm or less.

According to one embodiment of the present disclosure, the inorganic particles may have an average particle diameter D₅₀ of 40 nm or more to 300 nm or less.

According to one embodiment of the present disclosure, the content of the silicon-based active material in the negative electrode may be 50% by weight or more.

According to one embodiment of the present disclosure, the negative electrode may have a hardness of 50 MPa or more to 350 MPa or less.

According to one embodiment of the present disclosure, the content of the polymer binder may be 30 parts by weight or less based on 100 parts by weight of the separator.

According to one embodiment of the present disclosure, the polymer binder may be an acrylic binder, a polyvinylidene-based binder, or a combination thereof.

According to one embodiment of the present disclosure, the separator may have a thickness of 10 µm or more to 30 µm or less.

According to one embodiment of the present disclosure, the separator may have an air permeability change rate according to Equation 1 below of 10% or less. Air permeability change rate (%) = {(Air permeability of the separator after applying pressure - Air permeability of the separator before applying pressure) / Air permeability of the separator before applying pressure} × 100

One embodiment of the present disclosure provides an electrochemical device including: a positive electrode; a negative electrode containing a silicon-based active material; and the separator interposed between the positive electrode and the negative electrode containing the silicon-based active material.

According to one embodiment of the present disclosure, the electrochemical device may have a driving voltage range of 2.5 V to 4.2 V.

### [EFFECTS OF INVENTION]

The self-supporting separator for an electrochemical device according to one embodiment of the present disclosure may have improved compression resistance.

The electrochemical device including a self-supporting separator for an electrochemical device according to one embodiment of the present disclosure can improve energy density and lifespan characteristics by utilizing the lower limit voltage.

### [BEST MODE FOR CARRYING OUT THE INVENTION]

In this specification, when a part "includes" a certain component, this means that it may further include other components rather than excluding other components, unless specifically stated to the contrary.

In this specification, "A and/or B" means "A and B, or A or B."

In this specification, when it is said to be provided "on" one component, unless specifically stated to the contrary, this means that it is not excluded that other component may be disposed therebetween, but another component may be further disposed.

In this specification, the characteristic of "containing pores" means that an object contains a plurality of pores so that gas-phase and/or liquid-phase fluid can pass from one side surface of the object to the other side surface due to a structure in which the pores are connected to one other.

In this specification, the separator has porous characteristics including a large number of pores, and serves as an ion-conducting barrier that allows ions to pass while blocking electrical contact between the negative electrode and the positive electrode in an electrochemical device.

In this specification, "a self-supporting separator for an electrochemical device" refers to a separator for an electrochemical device, which includes inorganic particles and a polymer binder but is not provided with a porous polymer substrate.

Hereinafter, the present disclosure will be described in more detail.

One embodiment of the present disclosure provides a self-supporting separator for an electrochemical device, which includes a negative electrode containing a silicon-based active material, wherein the self-supporting separator for an electrochemical device includes inorganic particles and a polymer binder provided on part or all of the surface of the inorganic particles, and contains pores, the content of the inorganic particles is 70 parts by weight or more based on 100 parts by weight of the separator, and the separator has a surface roughness Sa of 600 nm or more to 1,100 nm or less.

The self-supporting separator for an electrochemical device according to one embodiment of the present disclosure may have improved compression resistance. In addition, when the separator for an electrochemical device according to one embodiment of the present disclosure is applied to an electrochemical device including a negative electrode containing a silicon-based active material, the energy density and lifespan characteristics of the electrochemical device can be improved. In other words, there is an advantage in that high energy density can be realized even with a thin electrode due to the high capacity in that the silicon-based active material among the negative electrode active materials used in the negative electrode of the electrochemical device has a capacity about 10 times higher than that of a carbon-based active material.

According to one embodiment of the present disclosure, the self-supporting separator for an electrochemical device does not include a porous polymer substrate. Since the self-supporting separator for an electrochemical device does not include the porous polymer substrate, the heat resistance of the separator can be improved, and the separator can be prevented from shrinking at high temperatures and causing an electrical short circuit in the electrode.

According to one embodiment of the present disclosure, the separator contains inorganic particles and a polymer binder. As described above, since the separator contains the inorganic particles and the polymer binder, the heat resistance of the separator can be improved, and the separator can be prevented from shrinking at high temperatures and causing an electrical short circuit in the electrode. Furthermore, pores can be formed inside the separator.

According to one embodiment of the present disclosure, the separator contains inorganic particles. Non-limiting examples of the inorganic particles may be BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, SiC, Al(OH)₃, TiO₂, aluminum peroxide, zinc tin hydroxide (ZnSn(OH)₆), tin-zinc oxide (Zn₂SnO₄, ZnSnO₃), antimony trioxide (Sb₂O₃), antimony tetroxide (Sb₂O₄), antimony pentoxide (Sb₂O₅), zeolite A, zeolite X, zeolite Y, γ-AlO(OH), etc., and may include one or two or more thereof. As described above, when the separator contains the inorganic particles, the heat resistance of the separator can be improved.

According to one embodiment of the present disclosure, the separator contains a polymer binder provided on part or all of the surface of the inorganic particles. As described above, the separator may contain a polymer binder provided on part or all of the surface of the inorganic particles, thereby densely stacking the inorganic particles to improve the compression resistance of the separator.

According to one embodiment of the present disclosure, the separator contains pores. Specifically, it may contain a plurality of pores. More specifically, the separator may be a porous separator containing a plurality of pores therein. As described above, since the separator contains pores, it is possible to allow lithium ions to pass through and thus allow current to flow while physically blocking the negative electrode and positive electrode.

According to one embodiment of the present disclosure, the separator may be formed by binding inorganic particles with a polymer binder and accumulating them in a layer. Pores inside the separator may result from an interstitial volume, which is an empty space between the inorganic particles. As will be specifically described later, there may be differences in the structure and size of pores depending on the content and average particle diameter of inorganic particles. Furthermore, the transition metal eluted from the positive electrode can be prevented from passing to the negative electrode face depending on the difference in the structure and size of the pores.

According to one embodiment of the present disclosure, the content of the inorganic particles is 70 parts by weight or more based on 100 parts by weight of the separator. Specifically, it may be 70 parts by weight or more to less than 100 parts by weight, 75 parts by weight or more to 95 parts by weight or less, or 80 parts by weight or more to 90 parts by weight or less based on 100 parts by weight of the separator. The content of the inorganic particles is adjusted within the above-described range, so the heat resistance and compression resistance of the separator can be improved, and the separator can be prepared as a self-supporting separator.

According to one embodiment of the present disclosure, the separator has a surface roughness Sa of 600 nm or more to 1100 nm or less. Specifically, the separator may have a surface roughness Sa of 650 nm or more to 1050 nm or less, 700 nm or more to 1000 nm or less, 750 nm or more to 950 nm or less, or 750 nm or more to 900 nm or less. In this specification, the surface roughness Sa may be defined as a value obtained by performing the arithmetic mean of the differences, respectively, between the center line and the vertical direction of each part randomly extracted from the surface facing the electrode of the separator using the long axis of the separator as the center line. The surface roughness of the separator is adjusted within the above-described range, so that the compression resistance of the separator can be improved without agglomeration of the inorganic particles and the polymer binder.

According to one embodiment of the present disclosure, the surface roughness Sa of the separator can be measured using Optical Profiler NV 2700 from Nanosystem. The upper surface of the separator is set on the sample stage by using it as a measurement surface, and the average value in four different measurement areas respectively can be calculated. The setting conditions of the measuring device are as follows.

Cutoff: 0.8 mm, scan speed: 0.1 mm/s, magnification: 500x

According to one embodiment of the present disclosure, the inorganic particles may have an average particle diameter D₅₀ of 40 nm or more to 300 nm or less. Specifically, the inorganic particles may have an average particle diameter D₅₀ of 50 nm or more to 290 nm or less, 60 nm or more to 280 nm or less, 70 nm or more to 270 nm or less, 80 nm or more to 260 nm or less, 90 nm or more to 250 nm or less, 100 nm or more to 240 nm or less, 110 nm or more to 230 nm or less, 120 nm or more to 220 nm or less, 130 nm or more to 210 nm or less, 140 nm or more to 200 nm or less, 150 nm or more to 190 nm or less, or 160 nm or more to 180 nm or less. The average particle diameter D₅₀ of the inorganic particles can be adjusted in the above-described range, thereby improving the phase separation speed and phase separation efficiency between the polymer binder and the inorganic particles in a slurry for a separator, which is an emulsion containing the polymer binder dispersed in water. Furthermore, if it is less than 40 nm, the dispersibility of inorganic particles in the slurry prepared for separator preparation may decrease, and if it exceeds 300 nm, the compression resistance of the separator to be formed may decrease.

In this specification, "D₅₀ particle diameter" means a particle diameter at the 50% point of the cumulative distribution of particle numbers according to particle diameter. The particle diameter can be measured using a laser diffraction method. Specifically, when the particles pass through the laser beam by dispersing a measurement target powder in a dispersion medium and then introducing it into a commercially available laser diffraction particle size measuring device (for example, Microtrac S3500), the particle size distribution is calculated by measuring the difference in diffraction patterns according to particle size. The D₅₀ particle diameter can be measured by calculating the particle diameter at a point that becomes 50% of the particle number cumulative distribution according to particle diameter in the measuring device.

According to one embodiment of the present disclosure, the inorganic particles usable in the separator may be electrochemically stable. That is, the inorganic particles that can be used in one embodiment of the present disclosure may be those in which oxidation and/or reduction reactions do not occur in the operating voltage range of an electrochemical device applied (e.g., 0 V to 5 V based on Li/Li⁺).

According to one embodiment of the present disclosure, the negative electrode contains a silicon-based active material. Specifically, the negative electrode may contain a silicon-based compound as a silicon-based active material. Non-limiting examples of the silicon-based compound may be Si, SiOₓ (0<x<2), Si-Y (Y is alkali metals, alkaline earth metals, Group 13 elements, Group 14 elements, transition metals, rare earth elements, or combinations thereof, and is not Si) alloys, Si-C composites, etc., and may include one or two or more thereof. Specifically, when the silicon-based negative electrode active material is contained in the negative electrode, energy density and rapid charging performance may be improved.

According to one embodiment of the present disclosure, the content of the silicon-based active material in the negative electrode may be 50% by weight or more. Specifically, the content of the silicon-based active material in the negative electrode may be 50% by weight or more to less than 100% by weight, 55% by weight or more to 95% by weight or less, 60% by weight or more to 90% by weight or less, 65% by weight or more to 85% by weight or less, or 70% by weight or more to 80% by weight or less. The content of the silicon-based active material may be adjusted within the above-described range, thereby maintaining the hardness of the negative electrode within a certain range to prevent pore deformation of the separator.

According to one embodiment of the present disclosure, the negative electrode may have a hardness of 50 MPa or more to 350 MPa or less. Specifically, the negative electrode may have a hardness of 75 MPa or more to 325 MPa or less, 100 MPa or more to 300 MPa or less, 125 MPa or more to 275 MPa or less, 150 MPa or more to 250 MPa or less, or 175 MPa or more to 225 MPa or less. The hardness of the negative electrode may be adjusted within the above-described range, thereby preventing the pores of the separator from being deformed during the assembly process of the electrochemical device.

According to one embodiment of the present disclosure, the hardness of the negative electrode may be measured by applying a micro-indenter measuring machine. Indentation equipment from Anton Paar may be used as the micro-indenter measuring machine. The electrode was indented to a depth of 5µm, and hardness was measured by loading/unloading 5 points per indentation depth at a rate of 2N per minute.

According to one embodiment of the present disclosure, the content of the polymer binder may be 30 parts by weight or less based on 100 parts by weight of the separator. Specifically, the content of the polymer binder may be more than 0 parts by weight to 30 parts by weight or less, 5 parts by weight or more to 25 parts by weight or less, or 10 parts by weight or more to 20 parts by weight or less based on 100 parts by weight of the separator. The content of the polymer binder may be adjusted within the above-described range, thereby enabling the porosity of the separator to be maintained and enabling the adhesive force to be maintained even if the coating layer is wet by the electrolyte after activation of the battery.

According to one embodiment of the present disclosure, the polymer binder may be a particle type or a non-particle type. Specifically, as will be described later, the polymer binder may maintain a particle shape without being dissolved by a dispersion medium or solvent, or the polymer binder may be dissolved in the dispersion medium or solvent and may not maintain the particle shape. As described above, the mechanical properties and porosity of the separator can be adjusted by selecting the polymer binder that is the particle type or the non-particle type.

According to one embodiment of the present disclosure, the polymer binder that is the particle type has an average particle diameter D₅₀ of 1.0 µm or less. Specifically, the polymer binder particles may have an average particle diameter D₅₀ of 0.10 µm or more to 0.90 µm or less, 0.15 µm or more to 0.85 µm or less, 0.20 µm or more to 0.70 µm or less, 0.25 µm or more to 0.65 µm or less, or 0.30 µm or more to 0.50 µm or less. The average particle diameter D₅₀ of the particle-type polymer binder may be adjusted in the above-described range, thereby improving phase separation speed and phase separation efficiency between the particle-type polymer binder and the inorganic particles in the slurry for the coating layer, which is an emulsion containing the particle-type polymer binder dispersed in water.

According to one embodiment of the present disclosure, the polymer binder may be an acrylic binder, a polyvinylidene-based binder, or a combination thereof.

According to one embodiment of the present disclosure, the polymer binder may include two or more types of polymer binders. As described above, the polymer binder may include two or more types of polymer binders, thereby improving the adhesive force between inorganic substances in the coating layer, improving the porosity of the coating layer, and improving dry adhesive force in a state before injecting the electrolyte and wet adhesive force after injecting the electrolyte at the same time.

According to one embodiment of the present disclosure, the polymer binder may include an acrylic binder. The porosity of the separator may be maintained, and the adhesive force between the electrode and the separator may be improved in the battery lamination process, thereby improving the ease of battery manufacturing and stably implementing the stacking process.

According to one embodiment of the present disclosure, the acrylic binder is a polymer containing carboxylic acid ester as a repeating unit, and may preferably be (meth)acrylic acid ester or acrylic-styrene copolymer.

According to one embodiment of the present disclosure, specific examples of the (meth)acrylic acid ester may include methyl (meth)acrylate, ethyl (meth)acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate , n-octyl (meth)acrylate, nonyl (meth)acrylate, decyl (meth)acrylate, hydroxymethyl (meth)acrylate, hydroxyethyl (meth)acrylate, ethylene glycol (meth)acrylate, ethylene glycol di(meth)acrylate, propylene glycol di(meth)acrylate, trimethylolpropane tri(meth)acrylate, pentaerythritol tetra(meth)acrylate, dipentaerythritol hexa(meth)acrylate, allyl (meth)acrylate, ethylene di(meth)acrylate, and the like, and the (meth)acrylic acid ester may be one or more selected therefrom. Among these, one or more selected from methyl (meth)acrylate, ethyl (meth)acrylate, and 2-ethylhexyl (meth)acrylate are preferable, and methyl (meth)acrylate is especially preferable.

According to one embodiment of the present disclosure, the acrylic-styrene copolymer may include an acrylic binder, and the acrylic binder may be a polyacrylate-based binder. For example, the binder may be one or more selected from the group consisting of styrenebutadiene rubber, nitrile-butadiene rubber, acrylonitrile-butadiene rubber, acrylonitrile-butadiene-styrene rubber, and acrylate-based polymers, and specifically, may be a copolymer containing acrylate.

According to one embodiment of the present disclosure, the polymer binder may include a polyvinylidene-based binder. Specifically, according to one embodiment of the present disclosure, the polyvinylidene-based binder may be a copolymer of polyvinylidene fluoride and hexafluoropropylene. As described above, as the polymer binder a polyvinylidene-based binder may be selected, thereby maintaining the porosity of the separator, and maintaining adhesive force even if the coating layer is wetted by the electrolyte after activation of the battery. Furthermore, the stiffness of the battery may be improved, and bending of the separator may be prevented.

According to one embodiment of the present disclosure, the polyvinylidene-based binder may be an aqueous binder. Specifically, an aqueous binder may be selected as the polyvinylidene-based binder, thereby reducing the manufacturing cost of the battery by minimizing pollutants discharged from the preparation process of the separator.

According to one embodiment of the present disclosure, the thickness of the separator may be 10 µm or more to 30 µm or less, but is not particularly limited thereto. Specifically, the thickness of the separator may be 12 µm or more to 28 µm or less, 14 µm or more to 26 µm or less, 16 µm or more to 24 µm or less, or 18 µm or more to 22 µm or less. The thickness may be adjusted to an appropriate range by a person skilled in the art in terms of heat resistance or electrical resistance. As described above, since the inorganic particles constituting the separator form a dense stacking structure, and the average particle diameter D₅₀ of the inorganic particles is 300 nm or less, the thickness of the separator may be adjusted to an appropriate range within the above-described range.

According to one embodiment of the present disclosure, the thickness of the separator may be measured by applying a contact-type thickness gauge. For example, VL-50S-B from Mitutoyo may be used as the contact-type thickness gauge.

According to one embodiment of the present disclosure, the separator may have improved compression resistance. Specifically, the compression resistance of the separator may be improved by adjusting the content and average particle diameter D₅₀ of the inorganic particles contained in the separator. In addition, a separator with improved compression resistance may improve the performance of an electrochemical device by suppressing deformation of the pores of the separator when a silicon-based negative electrode active material with a large volumetric expansion rate during charging and discharging is used as the negative electrode.

According to one embodiment of the present disclosure, the separator may have an air permeability change rate of 10% or less. Specifically, the separator may have an air permeability change rate of more than 0% to 10% or less, 1% or more to 9% or less, 2% or more to 8% or less, 3% or more to 7% or less, or 4% or more to 6% or less. As described above, the air permeability change rate of the separator may be shown to be low since the change in pores is not significant even after passing through the lamination process by improving compression resistance by adjusting the content and average particle diameter D₅₀ of the inorganic particles contained in the separator.

In this specification, "air permeability change rate" may indicate its change rate by measuring the air permeability before and after the separator goes through the lamination process.

According to one embodiment of the present disclosure, the separator may have a porosity of 30% by volume or more. Specifically, the separator may have a porosity of 30% by volume or more to 70% by volume or less, 32% by volume or more to 68% by volume or less, 34% by volume or more to 66% by volume or less, 36% by volume or more to 64% by volume or less, 38% by volume or more to 62% by volume or less, 40% by volume or more to 60% by volume or less, 42% by volume or more to 58% by volume or less, 44% by volume or more to 56% by volume or less, 46% by volume or more to 54% by volume or less, or 48% by volume or more to 52% by volume or less. The porosity of the separator may be adjusted within the above-described range, thereby maintaining the movement of ions in the separator and preventing an increase in resistance of the separator. Specifically, if the porosity is 70% by volume or less, since dynamic properties that can withstand the press process of bonding the separator to the electrode can be secured, and additionally, the surface opening ratio does not become too high, it is suitable for securing adhesive force. Meanwhile, if the porosity is 30% by volume or more, it is advantageous from the viewpoint of ion permeability.

In this specification, "porosity" refers to the ratio of the volume occupied by pores to the total volume, % by volume is used as its unit, and may be used interchangeably with terms such as void proportion and porous degree.

In this specification, porosity corresponds to a value obtained by subtracting the volume converted to the weight and density of each component of the separator from the volume calculated by the thickness, width, and length of the separator.

In one embodiment of the present disclosure, the porosity and pore size of the separator may be measured with the BET 6 point method by a nitrogen gas adsorption and distribution method using a scanning electron microscope (SEM) image, a mercury porosimeter, a capillary flow porometer, or a porosimetry analyzer (Bell Japan Inc, Belsorp-II mini). At this time, it may be advantageous to use the capillary flow porometer.

According to one embodiment of the present disclosure, a method of forming the separator is, for example, as follows. First, a polymer solution or polymer emulsion is prepared by dissolving the polymer binder in an appropriate solvent or dispersing it in a dispersion medium. Non-limiting examples of usable solvents or dispersion mediums include N-methyl-2-pyrrolidone (NMP), acetone, tetrahydrofuran, methylene chloride, chloroform, dimethylformamide, cyclohexane, water, or mixtures thereof.

Next, inorganic particles are dispersed in an appropriate solvent to prepare an inorganic slurry. Usable solvents include propylene carbonate (PC), ethylene carbonate (EC), N-methyl-2-pyrrolidone (NMP), or mixtures thereof. According to one embodiment of the present disclosure, the content ratio of the inorganic particles and the polymer binder is as described above and is appropriately adjusted in consideration of the thickness, pore size, and porosity of the separator of the present disclosure finally prepared.

Next, the inorganic slurry prepared above is applied to at least one surface of the prepared PET release film and dried. The method of applying the inorganic slurry to the surface of the PET release film is not limited to any one method in particular, and conventional methods known in the art may be used. For example, various methods such as dip coating, die coating, roll coating, comma coating, or combinations thereof may be used.

In the drying process, temperature and time conditions are appropriately set to minimize the occurrence of surface defects of the separator. For the drying, a drying auxiliary device such as a drying oven or hot air may be used within an appropriate range.

After the drying process, the PET release film may be removed to prepare the separator.

According to one embodiment of the present disclosure, the separator is interposed between the negative electrode and the positive electrode and is prepared as an electrochemical device by a lamination process in which heat and/or pressure are applied to bind them. In one embodiment of the present disclosure, the lamination process may be performed by a roll press device including a pair of pressure rollers. That is, interlayer binding may be achieved by sequentially stacking the negative electrode, separator, and positive electrode and inputting them between the pressure rollers. At this time, the lamination process may be performed by a hot pressing method.

One embodiment of the present disclosure provides an electrochemical device including: a positive electrode; a negative electrode containing a silicon-based active material; and the separator interposed between the positive electrode and the negative electrode containing the silicon-based active material.

The electrochemical device according to one embodiment of the present disclosure may improve heat resistance and compression resistance and may improve the energy density and lifespan characteristics of the battery by including a separator which includes inorganic particles and a polymer binder provided on part or all of the surface of the inorganic particles, contains pores, has a surface roughness Sa of 600 nm or more to 1100 nm or less, and is free from a porous polymer substrate.

According to one embodiment of the present disclosure, the electrochemical device may have a driving voltage range of 2.5 V to 4.2 V. Specifically, the electrochemical device may utilize the lower limit voltage of a battery including the negative electrode containing a silicon-based active material by including a separator with improved compression resistance.

In the present disclosure, the electrochemical device is a device that converts chemical energy into electrical energy by an electrochemical reaction, and is a concept encompassing a primary battery and a secondary battery. In this specification, the secondary battery is capable of charging and discharging, and refers to a lithium secondary battery, a nickel-cadmium battery, a nickel-hydrogen battery, etc. The lithium secondary battery uses lithium ions as an ion conductor, and examples thereof may include a non-aqueous electrolyte secondary battery containing a liquid electrolyte, an all-solid-state battery containing a solid electrolyte, a lithium polymer battery containing a gel polymer electrolyte, and a lithium metal battery using lithium metal as a negative electrode, but are not limited thereto.

According to one embodiment of the present disclosure, the positive electrode is provided with a positive electrode current collector and a positive electrode active material layer containing a positive electrode active material, a conductive material, and a binder resin on at least one surface of the current collector. The positive electrode active material may include one or mixtures of two or more of: a layered compound such as lithium manganese composite oxide (LiMn₂O₄, LiMnO₂, or the like), lithium cobalt oxide (LiCoO₂), or lithium nickel oxide (LiNiO₂), or a compound substituted with one or more transition metals; lithium manganese oxide represented by the formula Li₁₊ₓMn₂₋ₓO₄ (where x is 0 to 0.33) such as LiMnO₃, LiMn₂O₃, LiMnO₂, or the like; lithium copper oxide (Li₂CuO₂); vanadium oxide such as LiV₃O₈, LiV₃O₄, V₂O₅, Cu₂V₂O₇, or the like; Ni site-type lithium nickel oxide represented by the formula LiNi₁₋ₓMₓO₂ (where M = Co, Mn, Al, Cu, Fe, Mg, B, or Ga, and x = 0.01 to 0.3); lithium manganese complex oxide represented by the formula LiMn₁₋ₓMxO₂ (where M = Co, Ni, Fe, Cr, Zn, or Ta, and x = 0.01 to 0.1) or Li₂Mn₃MO₈ (where M = Fe, Co, Ni, Cu, or Zn); LiMn₂O₄ in which part of Li in the formula is substituted with an alkaline earth metal ion; disulfide compounds; and Fe₂(MoO₄)₃.

According to one embodiment of the present disclosure, the negative electrode is provided with a negative electrode current collector and a negative electrode active material layer containing a negative electrode active material, a conductive material, and a binder resin on at least one surface of the current collector. The negative electrode active material may include one or more silicon-based negative electrode active materials selected from the group consisting of Si, SiOₓ (0<x<2), an Si-Y alloy, and an Si-C composite. Furthermore, the negative electrode may further contain, as a negative electrode active material, one or mixtures of two or more selected from: lithium metal oxide; carbon such as non-graphitizable carbon, and graphitic carbon; metal composite oxide such as LiₓFe₂O₃ (0≤x≤1), LiₓWO; (0≤x≤1), or SnₓMe₁₋ₓMe'_{y}O_{z} (Me: Mn, Fe, Pb, or Ge; Me': Al, B, P, Si, Group 1, 2 or 3 element of the periodic table, or halogen; 0<x≤1; 1≤y≤3; and 1≤z≤8); lithium metal; a lithium alloy; a silicon-based alloy; a tin-based alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene or the like; an Li-Co-Ni based material; and titanium oxide.

According to one embodiment of the present disclosure, the conductive material may be, for example, any one selected from the group consisting of graphite, carbon black, carbon fiber or metal fiber, metal powder, conductive whisker, conductive metal oxide, activated carbon, and polyphenylene derivatives, or mixtures of two or more conductive materials thereof. More specifically, it may be one selected from the group consisting of natural graphite, artificial graphite, super-p, acetylene black, Ketjen black, channel black, furnace black, lamp black, thermal black, denka black, aluminum powder, nickel powder, zinc oxide, potassium titanate, and titanium oxide, or mixtures of two or more conductive materials thereof.

According to one embodiment of the present disclosure, the current collector is not particularly limited as long as it has high conductivity without causing chemical changes in the relevant battery, and for example, stainless steel, copper, aluminum, nickel, titanium, calcined carbon, or aluminum or stainless steel, which has its surface treated with carbon, nickel, titanium, silver, or the like, may be used.

According to one embodiment of the present disclosure, a polymer commonly used in electrodes in the art may be used as the binder resin. Non-limiting examples of such a binder resin may include polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinyl acetate, poly(ethylene-co-vinyl acetate) copolymer, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxylmethyl cellulose, etc., but is not limited thereto.

According to one embodiment of the present disclosure, the positive electrode slurry for preparing the positive electrode active material layer may contain a dispersant, and the dispersant may be a pyrrolidone-based compound. Specifically, it may be N-methylpyrrolidone (ADC-01, LG Chemical Co., Ltd.).

According to one embodiment of the present disclosure, the content of the dispersant contained in the positive electrode slurry may be more than 0 parts by weight to 0.5 parts by weight or less based on 100 parts by weight of the positive electrode slurry. Specifically, the content of the dispersant contained in the positive electrode slurry may be more than 0.05 parts by weight to 0.4 parts by weight or less based on 100 parts by weight of the positive electrode slurry.

According to one embodiment of the present disclosure, the negative electrode slurry for preparing the negative electrode active material layer may contain a dispersant, and the dispersant may be a CMC dispersant (SWCNT, OCSiAl, Tuball dispersion).

According to one embodiment of the present disclosure, the content of the dispersant contained in the negative electrode slurry may be more than 0 parts by weight to 1.0 parts by weight or less based on 100 parts by weight of the negative electrode slurry. Specifically, the content of the dispersant contained in the negative electrode slurry may be 0.1 parts by weight or more to 0.9 parts by weight or less, 0.2 parts by weight or more to 0.8 parts by weight or less, 0.3 parts by weight or more to 0.7 parts by weight or less, or 0.4 parts by weight or more to 0.6 parts by weight or less based on 100 parts by weight of the negative electrode slurry.

According to one embodiment of the present disclosure, a battery may be manufactured by charging the electrochemical device prepared as described above into an appropriate case and injecting an electrolyte.

According to one embodiment of the present disclosure, the electrolyte may be ones in which salts with a structure such as A⁺B⁻ in which A⁺ includes ions consisting of alkali metal cations such as Li⁺, Na⁺ and K⁺, or combinations thereof, and B⁻ includes ions consisting of anions such as PF₆⁻, BF₄⁻, Cl⁻, Br⁻, I⁻, ClO₄⁻, AsF₆⁻, CH₃CO₂⁻, CF₃SO₃⁻, N(CF₃SO₂)²⁻, and C(CF₂SO₂)³⁻, or combinations thereof are dissolved or dissociated in an organic solvent consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone (γ-butyrolactone), or mixtures thereof, but is not limited thereto.

One embodiment of the present disclosure provides a battery module including as a unit cell a battery including the electrochemical device, a battery pack including the battery module, and a device including the battery pack as a power source. Specific examples of the device may include a power tool that is powered by an electric motor and moves; electric cars including electric vehicles (EVs), hybrid electric vehicles (HEVs), plug-in hybrid electric vehicles (PHEVs), etc.; electric two-wheeled vehicles including electric bicycles (E-bikes) and electric scooters (E-scooters); electric golf carts; power storage systems; etc., but are not limited thereto.

### [MODE FOR CARRYING OUT THE INVENTION]

Hereinafter, the present disclosure will be described in detail with reference to examples in order to specifically explain the present disclosure. However, the examples according to the present disclosure may be modified into various other forms, and the scope of the present disclosure should not be construed as being limited to the examples described below. The examples of this specification are provided to more completely explain the present disclosure to those skilled in the art.

### <Example 1>

### <Preparation of separator>

As inorganic particles, boehmite (Sasol, Disperal60) with an average particle diameter D₅₀ of 60 nm and boehmite (Sasol, Disperal80) with an average particle diameter D₅₀ of 80 nm were put into propylene carbonate (PC) as a solvent at a weight ratio of 3:2 and dispersed to prepare an oil-based slurry.

A polymer binder solution in which PVDF (Solvay, Solef5140-02) as a polymer binder was put into and dispersed in an NMP solvent was added to the oil-based slurry in accordance with the weight ratio, and then the mixture was stirred at a rate of 3,000 rpm for 45 minutes to prepare an inorganic slurry.

Thereafter, the inorganic slurry was applied to one surface of the PET release film by a bar coating method using a doctor blade and dried with wind at 50°C using a heat gun. The weight ratio of the inorganic particles and the polymer binder was 73:27.

Thereafter, the PET release film was removed to prepare a separator with a total thickness of 14.7 µm and a surface roughness Sa of 750 nm.

An electrochemical device including the above-prepared separator was manufactured to perform an experiment in a driving voltage range of 2.5 V to 4.2 V.

### <Manufacture of electrochemical device>

### 1) Preparation of positive electrode

A positive electrode active material (LiNi_{0.8}Mn_{0.1}Co_{0.1}O₂), a conductive material (carbon black), a dispersant (N-methylpyrrolidone, ADC-01, LG Chemical Co., Ltd.), and a binder resin (mix of PVDF-HFP and PVDF) were mixed with water at a weight ratio of 97.5:0.7:0.14: 1.66 to prepare a slurry for the positive electrode active material layer having a concentration of the remaining components excluding water of 50% by weight. Next, the slurry was applied to the surface of an aluminum thin film (10 µm thick) and dried to prepare a positive electrode having a positive electrode active material layer (120 µm thick).

### 2) Preparation of negative electrode

Silicon particles (Elkem, M702), a PAM-based binder (Arakawa, BUH0452), a conductive material (Imerys, SFG-6L), a conductive material (SWCNT, OCSiAl, Tuball dispersion), and a CMC dispersant (SWCNT, OCSiAl, Tuball dispersion) were mixed with water at a weight ratio of 80:9.4:9.6:0.4:0.6 to prepare a slurry for the negative electrode active material layer having a concentration of the remaining components excluding water of 25% by weight. Next, the slurry was applied to the surface of a copper thin film (8 µm thick) and dried to prepare a negative electrode with a negative electrode loading of 8 mAh/cm².

### 3) Lamination process

An electrode assembly was obtained by stacking the separator of Example 1 to be interposed between the prepared negative electrode and positive electrode and performing a lamination process. The lamination process was performed using a hot press under conditions of 70°C and 5.2 MPa for 10 seconds.

### <Example 2>

A separator was prepared in the same manner as in Example 1, except that in Example 1 above, the weight ratio of the inorganic particles and the polymer binder was 75:25, the surface roughness Sa was 600 nm, and the thickness was 14.8 µm.

An electrochemical device including the above-prepared separator was manufactured to perform an experiment in a driving voltage range of 2.5 V to 4.2 V.

### <Example 3>

A separator was prepared in the same manner as in Example 1 above, except that in Example 1 above, as inorganic particles, boehmite (Sasol, Disperal60) with an average particle diameter D₅₀ of 60 nm and boehmite (Sasol, Disperal80) with an average particle diameter D₅₀ of 80 nm had a weight ratio of 9: 1, and the inorganic particles and the polymer binder had a weight ratio of 70:30, the surface roughness Sa was 1,100 nm, and the thickness was 14.9 µm.

An electrochemical device including the above-prepared separator was manufactured to perform an experiment in a driving voltage range of 2.5 V to 4.2 V.

### <Comparative Example 1>

A separator was prepared in the same manner as in Example 1 above, except that in Example 1 above, boehmite with an average particle diameter D₅₀ of 500 nm instead of boehmite (Sasol, Disperal80) with an average particle diameter D₅₀ of 80 nm, as inorganic particles, was added, the surface roughness Sa was 300 nm, and the thickness was 14.6 µm.

An electrochemical device including the above-prepared separator was manufactured to perform an experiment in a driving voltage range of 2.5 V to 4.2 V.

### <Comparative Example 2>

A separator was prepared in the same manner as in Example 1 above, except that in Example 1 above, a polyolefin substrate with a thickness of 7 µm was used, the weight ratio of the inorganic particles and the polymer binder was set to 50:50 while coating the inorganic slurry of Example 1 on both surfaces of the polyolefin substrate, the surface roughness Sa was 450 nm, and the thickness was 14.8 µm.

An electrochemical device including the above-prepared separator was manufactured to perform an experiment in a driving voltage range of 2.5 V to 4.2 V.

### <Comparative Example 3>

A separator was prepared in the same manner as in Example 1 above, except that in Example 1 above, a polyolefin substrate with a thickness of 7 µm was used, boehmite with an average particle diameter D₅₀ of 500 nm instead of boehmite (Sasol, Disperal80) with an average particle diameter D₅₀ of 80 nm was added to both surfaces of the polyolefin substrate, the weight ratio of the inorganic particles and the polymer binder was set to 50:50, the surface roughness Sa was 300 nm, and the thickness was 15.0 µm.

An electrochemical device including the above-prepared separator was manufactured to perform an experiment in a driving voltage range of 2.5 V to 4.2 V.

### <Comparative Example 4>

A separator was prepared in the same manner as in Example 1 above, except that in Example 1 above, a polyolefin substrate with a thickness of 7 µm was used, the inorganic slurry of Example 1 was coated on both surfaces of the polyolefin substrate, the weight ratio of the inorganic particles and the polymer binder was set to 50:50, the surface roughness Sa was 450 nm, and the thickness was 14.7 µm.

An electrochemical device including the above-prepared separator was manufactured to perform an experiment in a driving voltage range of 3.0 V to 4.2 V.

### <Comparative Example 5>

A separator was prepared in the same manner as in Example 1 above, except that in Example 1 above, a polyolefin substrate with a thickness of 7 µm was used, the inorganic slurry of Comparative Example 1 to which inorganic particles with an average particle diameter D₅₀ of 500 nm were applied was coated on both surfaces of the polyolefin substrate, the weight ratio of the inorganic particles and the polymer binder was set to 50:50, the surface roughness Sa was 300 nm, and the thickness was 14.9 µm.

An electrochemical device including the above-prepared separator was manufactured to perform an experiment in a driving voltage range of 3.0 V to 4.2 V.

### <Comparative Example 6>

A separator was prepared in the same manner as in Example 1 above, except that in Example 1 above, inorganic particles with an average particle diameter D₅₀ of 60 nm were added, the weight ratio of the inorganic particles and the polymer binder was set to 65:35, the surface roughness Sa was 1,200 nm, and the thickness was 15.0 µm.

An electrochemical device including the above-prepared separator was manufactured to perform an experiment in a driving voltage range of 2.5 V to 4.2 V.

### <Experimental Example 1: Air permeability change rate of separator>

Air permeabilities (air permeation time, Gurley) of the separators of Examples and Comparative Examples were measured by the ASTM D-2873 method. Gurley values were measured using a Gurley type Densometer (No. 158) from Toyoseiki in accordance with the JIS Gurley measurement method of the Japanese industrial standard. The air permeability refers to the time for 100 cc of air to permeate an air permeation time measurement object such as a separator, and second/100 cc may be used as its unit. Air permeability change rates were expressed by measuring the air permeabilities before and after passing the separators of Examples and Comparative Examples through the lamination process.

### <Experimental Example 2: Performance maintenance rate of electrochemical device>

In order to proceed the lifespan evaluation of electrochemical devices manufactured by including the separators of Examples and Comparative Examples, the process of charging each electrochemical device to 4.2 V at 1.0 C and discharging it to 2.5 V or 3.0 V at 0.5 C for 100 cycles was proceeded, and the initial capacity and remaining capacity were measured to show the change rates thereof.

**[Table 1]**

| | Separator thickness (µm) | Separator air permeability change rates (%) | Electrochemical device driving voltage range (V) | Electrochemical device performance maintenance rate (%) |
|---|---|---|---|---|
| Example 1 | 14.7 | 5 | 2.5 to 4.2 | 97.3 |
| Example 2 | 14.8 | 8 | 2.5 to 4.2 | 97.0 |
| Example 3 | 14.9 | 10 | 2.5 to 4.2 | 96.8 |
| Comparative Example 1 | 14.6 | 11 | 2.5 to 4.2 | 95.2 |
| Comparative Example 2 | 14.8 | 35 | 2.5 to 4.2 | 89.8 |
| Comparative Example 3 | 15.0 | 45 | 2.5 to 4.2 | 87.4 |
| Comparative Example 4 | 14.7 | 35 | 3.0 to 4.2 | 91.3 |
| Comparative Example 5 | 14.9 | 45 | 3.0 to 4.2 | 90.4 |
| Comparative Example 6 | 15.0 | 12 | 2.5 to 4.2 | 95.0 |

Referring to Table 1, it was confirmed that the separator of Example 1 according to one embodiment of the present disclosure had the lowest air permeability change rate after compression resistance, and the performance maintenance rate of the electrochemical device was the most excellent even when the electrochemical device was used up to a driving voltage range of 2.5 Vto 4.2 V.

In addition, it was confirmed that air permeability change rates after compression resistance were maintained low in the surface roughness Sa range of 600 nm to 1,100 nm through Examples 1 to 3 above, and the performance maintenance rates of the electrochemical devices were excellent even when the electrochemical devices were used up to a driving voltage range of 2.5 Vto 4.2 V.

In contrast, it was confirmed that Comparative Example 1 had a worse air permeability change rate than Example 1, and that the performance maintenance rate also decreased when the same electrochemical device driving voltage range as Examples 1 to 3 was applied. This is determined to result in inferior compression resistance properties since, as the size of the inorganic material applied to the separator increases, the pore size of the separator increases and the distribution of pores widens.

Comparative Examples 2 and 3 are separators prepared by coating the inorganic slurries of Example 1 and Comparative Example 1, respectively, on both surfaces of a 7 µm thick polyolefin substrate. When a polyolefin substrate, which has low hardness and is soft compared to inorganic materials, was applied to the separator, the air permeability change rate after compression resistance showed a rapidly increasing trend. Due to this, when the voltage driving range of the manufactured electrochemical device was evaluated to be the same as Example 1, it was confirmed that the performance maintenance rate of the electrochemical device rapidly decreased.

Comparative Examples 4 and 5 were the same separators as Comparative Examples 2 and 3, and were experimented by changing the voltage driving ranges of the electrochemical devices to 3.0 V to 4.2 V. Therefore, it was confirmed that the air permeability change rates after compression resistance of the separators were the same as those of Comparative Examples 2 and 3. Although it was confirmed that the performance maintenance rates of the electrochemical devices were slightly improved when the voltage driving ranges of the electrochemical devices were changed to narrower ranges (3.0 V to 4.2 V) than those of Comparative Examples 2 and 3 (2.5 V to 4.2 V), but it was confirmed that their levels did not reach that of Example 1.

It was confirmed that Comparative Example 6 had a worse air permeability change rate than Example 1, and that the performance maintenance rate also decreased when the same electrochemical device driving voltage range was applied. This is determined to result in inferior compression resistance properties since, as the size of the inorganic material applied to the separator decreases, the roughness of the separator surface increases.

A self-supporting separator for an electrochemical device according to one embodiment of the present disclosure can adjust the surface roughness Sa of the separator by adjusting the content and average particle diameter of inorganic particles, thereby improving compression resistance, improving energy density, and having excellent electrochemical device performance maintenance rate to expect improved lifespan characteristics.

## Claims

1. A self-supporting separator for an electrochemical device, which is provided with a negative electrode containing a silicon-based active material, the self-supporting separator comprising inorganic particles and a polymer binder provided on part or all of the surface of the inorganic particles, and contains pores, the content of the inorganic particles is 70 parts by weight or more based on 100 parts by weight of the separator, and the separator has a surface roughness Sa of 600 nm or more to 1,100 nm or less.

2. The self-supporting separator for an electrochemical device of claim 1, wherein the inorganic particles have an average particle diameter D₅₀ of 40 nm or more to 300 nm or less.

3. The self-supporting separator for an electrochemical device of claim 1, wherein the content of the silicon-based active material in the negative electrode is 50% by weight or more.

4. The self-supporting separator for an electrochemical device of claim 1, wherein the negative electrode has a hardness of 50 MPa or more to 350 MPa or less.

5. The self-supporting separator for an electrochemical device of claim 1, wherein the content of the polymer binder is 30 parts by weight or less based on 100 parts by weight of the separator.

6. The self-supporting separator for an electrochemical device of claim 1, wherein the polymer binder is an acrylic binder, a polyvinylidene-based binder, or a combination thereof.

7. The self-supporting separator for an electrochemical device of claim 1, wherein the separator has a thickness of 10 µm or more to 30 µm or less.

8. The self-supporting separator for an electrochemical device of claim 1, wherein the separator has an air permeability change rate according to Equation 1 below of 10% or less. Air permeability change rate (%) = {(Air permeability of the separator after applying pressure - Air permeability of the separator before applying pressure) / Air permeability of the separator before applying pressure} × 100

9. An electrochemical device comprising: a positive electrode; a negative electrode containing a silicon-based active material; and the separator of claim 1 interposed between the positive electrode and the negative electrode containing the silicon-based active material.

10. The electrochemical device of claim 9, wherein the electrochemical device has a driving voltage range of 2.5 V to 4.2 V.
